# EUROPEAN PATENT SPECIFICATION

(11) **EP 2 147 593 B1**
(45) Date of publication and mention of the grant of the patent: **09.01.2019**
(21) Application number: 09166066.2
(22) Date of filing: 22.07.2009
(51) Int. Cl.: A01K 5/01

(54) **Containers with anti-slip provisions**
Behälter mit Antirutscheinrichtungen
Conteneurs dotés de propriétés anti-dérapage

(30) Priority: 24.07.2008 US 179125; 07.08.2008 IN DE18692008
(43) Date of publication of application: 27.01.2010
(73) Proprietor: Jain, Neeraj, Delhi 110 052 (IN)
(72) Inventor: Jain, Neeraj, Delhi 110 052 (IN)
(74) Representative: Grünecker Patent- und Rechtsanwälte PartG mbB

(56) References cited:
- WO-A1-02/10024
- CH-A- 404 127
- CN-U- 2 094 288
- CN-Y- 201 142 872
- GB-A- 2 433 418
- US-A- 5 372 274
- US-A- 5 579 946
- US-A1- 2001 045 188
- US-A1- 2003 033 986
- US-A1- 2005 109 779
- US-A1- 2007 261 641

## Description

### Technical Field

The embodiments disclosed herein are directed to pet bowls, having provisions that discourage slipping of the pet bowls across surfaces on which the pet bowls are resting.

### Background

US 5,579,946 discloses a thermal insulating household bowl or container which is for keeping the original temperature of the food or beverage contained therein. The thermal insulating container is to prevent heat transfer from occurring by radiation, convection and conduction. This is achieved by having the container with a double-wall structure. The gap between the walls is a vacuum or partial vacuum cavity which encompasses both the sidewalls and the bottom of the container.

GB 2 433 418 A discloses a household container with anti-slip capability including: a container body having a bottom wall that is formed with a bottom groove indented inwardly from its outer surface; and a flexible anti-slip member that is mounted in the bottom groove and that has an outer end face flush with the outer surface of the bottom wall.

CH 404 127 A discloses a household container with a removable anti-slip rubber ring protruding from the container bottom.

Stainless steel is widely considered a desirable material for water and food bowls used by dogs and other domesticated animals. In particular, scratches and gouges in a water or food bowl form areas that can promote the growth of harmful bacteria. Stainless steel is resistant to being scratched or gouged, in comparison to materials such as plastic. Thus scratches or gouges that promote the growth of bacteria are not easily formed on stainless steel bowls.

It is desirable for a water or food bowl to have some type of anti-slip feature to prevent the bowl from being pushed across the floor as the animal is drinking. For example, a strip of elastomeric material that discourages slipping may be attached to the bottom of the bowl using glue or some other type of permanent affixation means. Elastomeric materials, however, often degrade and detach from the bowl after being subjected to multiple washing cycles in a dishwasher.

Mounting an anti-slip provision so that it can be removed quickly and easily before the bowl is placed in the dishwasher can present difficulties, particularly in bowls formed from stainless-steel. For example, retaining the anti-slip provision using an interference fit requires that recesses, channels, or other features be formed in the bowl to relatively close dimensional tolerances. The stamping process typically used to shape stainless steel bowls is generally unsuitable for forming features with requisite degree to precision needed achieve an effective interference fit with an anti-slip provision.

### Summary

The present invention suggests a pet bowl according to claim 1. The dependent claims relate to advantageous features and embodiments of the invention.

### Brief Description of the Drawings

The foregoing summary, as well as, the following detailed description of preferred embodiments, are better understood when read in conjunction with the appended drawings. The drawings are presented for illustrative purposes only, and the scope of the appended claims is not limited to the specific embodiments shown in the drawings. In the drawings:
Figure 1 is a side view of an embodiment of a bowl having an anti-slip provision in the form of a ring;
Figure 2 is a cross-sectional view of the bowl shown in Figure 1, taken through the line "A-A" of Figure 4;
Figure 3 is a top perspective view of the bowl shown in Figures 1 and 2;
Figure 4 is a bottom view of the bowl shown in Figures 1-3;
Figure 5 is a magnified view of the area designated "B" in Figure 2;
Figure 6 is a magnified view of the area designated "B" in Figure 2, with the ring removed from an outer shell of the bowl;
Figure 7 is a magnified view of the area designated "B" in Figure 2, depicting the ring being removed from the outer shell; and
Figure 8 is a magnified view of the area designated "C" in Figure 2.

### Detailed Description

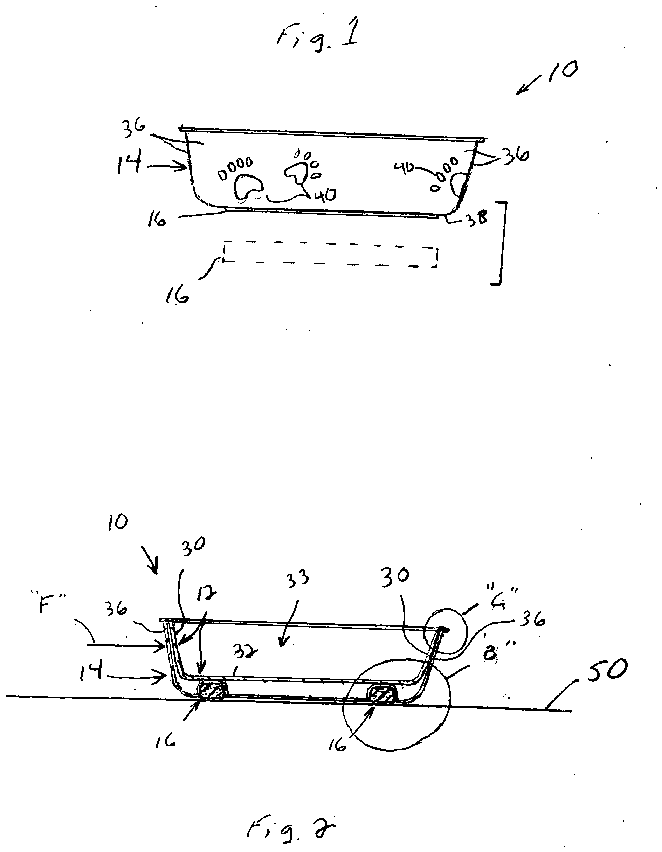

Figures 1-8 depict an embodiment of a pet bowl 10 with anti-slip provisions. The bowl 10 can be used, for example, as a watering bowl for a dog or other domesticated animal. The use of the bowl 10 for this particular application is disclosed for exemplary purposes only. The bowl 10, and alternative embodiments thereof, can be used in other applications.

The bowl 10 is depicted in Figure 2 as resting on a surface 50. The surface 50 can be, for example, a surface of a wooden or tile floor.

The bowl 10 comprises an inner shell 12, and an outer shell 14. The inner shell 12 is stamped or otherwise formed from a metallic material such as stainless steel. The outer shell 14 is formed from a non-metallic material such as a thermoplastic, thermosetting, or other plastic material, using injection molding or other suitable techniques.

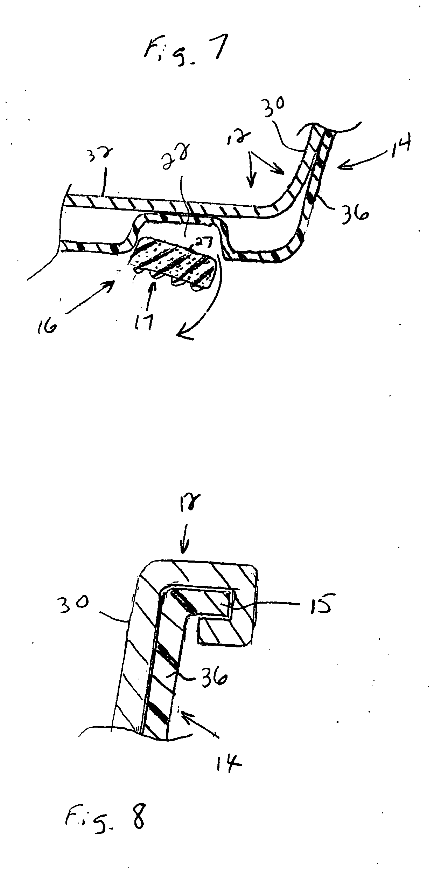

The inner shell 12 is sized and shaped to nest within the outer shell 14 as shown in Figure 2. The inner shell 12 can be secured to the outer shell 14 by, for example, folding and crimping an upper edge of the inner shell 12 over a lip 15 formed along an upper edge of the outer shell 14, as shown in Figure 8. The inner shell 12 can be secured to the outer shell 14 using other suitable means, such as fasteners or adhesives, in alternative embodiments.

The bowl 10 includes an anti-slip feature in the form of a ring 16. The ring 16 is mounted on the outer shell 14, so that a bottom surface 17 of the ring 16 faces downward and contacts the surface 50 as depicted in Figure 2.

Directional terms such as "bottom," "top," "downward," "upward," "horizontal," vertical," etc. are used with reference to the component orientations depicted in Figures 1 and 2. These terms are used for exemplary purposes only, and are not meant to limit the scope of the appended claims.

The ring 16 is formed from an elastomeric material that provides resistance to slipping when the bowl 10 is acted upon by an external force having a lateral, i.e., horizontal, component. For example, the ring 16 can be formed form synthetic or natural rubber. The horizontal force component is denoted by the reference character "F" in Figure 2.

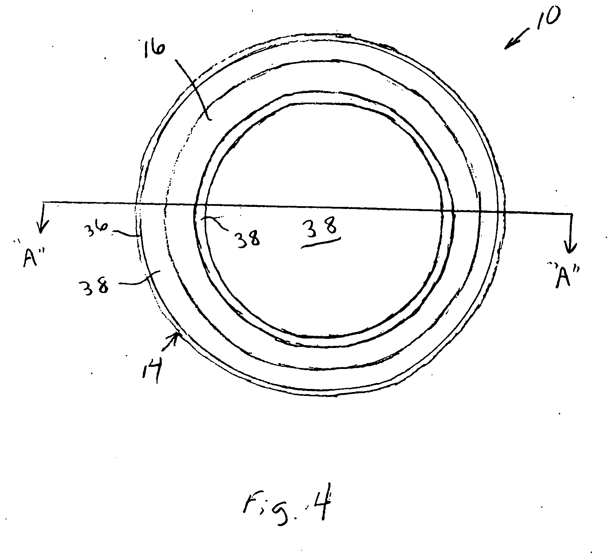

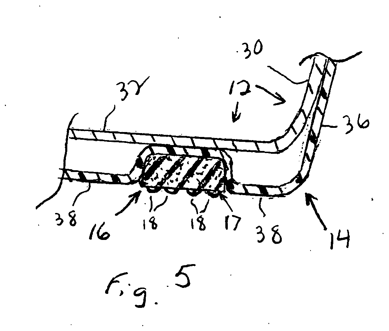

The bottom surface 17 of the ring 16 has a plurality of concentric ridges, projections, or ribs 18 formed thereon, as shown in Figures 5-7. The ribs 18 are not depicted in Figure 4, for clarity of illustration. The ribs 18, it is believed, can increase the friction between the ring 16 and the surface 50 when the surface 50 is wet.

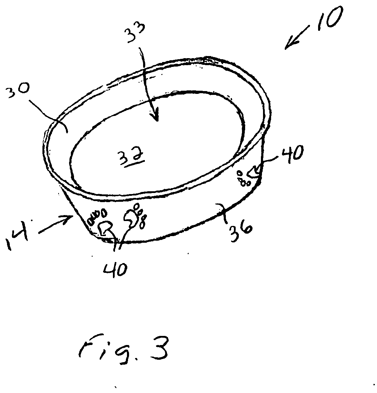

The inner shell 12 has a circumferentially-extending sidewall 30, and a substantially flat bottom surface 32 that adjoins the sidewall 30, as shown in Figures 2 and 3. The sidewall 30 and the bottom surface 32 define an open volume 33 that is capable of holding, for example, drinking water or food for an animal.

The outer shell 14 has a circumferentially-extending sidewall 36, and a bottom surface 38 that adjoins the sidewall 36.

The sidewall 30 and the sidewall 36 of the respective inner shell 12 and outer shell 14 can be angled upwardly and outwardly in relation to the vertical direction by, for example, approximately fifteen degrees. The sidewall 30 and the sidewall 36 can vertically oriented, or can be angled upwardly and inwardly, in alternative embodiments.

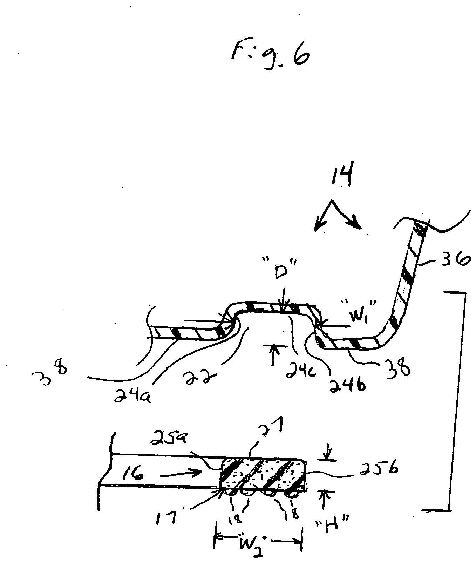

The ring 16 is mounted on the outer shell 14 in a manner that permits the ring 16 to be readily removed from and reinstalled on the outer shell 14. The outer shell 14 has a substantially circular, downwardly-facing recess in the form of a channel 22 formed therein, as shown in Figures 6 and 7. The channel 22 is defined by a first surface 24a, a second surface 24b, and a third surface 24b of the outer shell 14. The first surface 24a and the second surface 24b extend upward from the bottom surface 38 of the outer shell, are concentric, and form the sides of the channel 22. The third surface 24c adjoins the first and second surfaces 24a, 24b, and defines the top of the channel 22.

The width of the channel 22 is denoted by the symbol "W₁" in Figure 6, and is defined by the spacing between the first surface 24a and the second surface 24b. The width of the ring 16 is denoted by the symbol "W₂" in Figure 6, and is defined by the spacing between an inner circumferential surface 25a and an outer circumferential surface 25b of the ring 16.

The ring 16 is retained within the channel 22 by an interference fit. In particular, the ring 16 and the outer shell 14 are configured so that the width W₁ of the channel 22 is approximately equal to, or slightly less than the width W₂ of the ring 16. As a result of this arrangement, the ring 16 is retained in the channel 22 by friction between the first and second surfaces 24a, 24b of the outer shell 14 and the respective inner and outer circumferential surfaces 24a, 24b of the ring 16.

The depth of the channel 22 is denoted by the symbol "D" in Figure 6, and is defined by the height, or vertical dimension, of the first surface 24a and the second surface 24b of the outer shell 14. The height of the ring 16 is denoted by the symbol "H" in Figure 6, and is defined by a distance between the bottom of the ribs 18 and a top surface 27 of the ring 16. The ring 16 and the outer shell 14 are configured so that the height H of the ring 16 is slightly greater than the depth D of the channel 22. As a result of this arrangement, the ribs 18 extend below a plane that intersects the bottom surface 38 of the outer shell 14, and the remainder of the bottom surface 17 of the ring 16 is approximately co-planar with the bottom surface 38 as shown in Figures 2 and 5. The ribs 18 thus contact the surface 50 when the bowl 10 is resting on the surface 50.

Contact between the ribs 18 and the surface 50 gives rise to a frictional force that resists slipping of the bowl 10 across the surface 50 when the bowl 10 is acted upon by the horizontal force component F. This can occur, for example, when a dog or other animal tries to push the bowl across the surface 50 as the animal is drinking therefrom. The frictional force can thus prevent the bowl 10 from being moved from a desired or selected location on the surface 50.

The ring 16 can be removed quickly and easily from the outer shell 14. For example, an individual desiring to remove the ring 16 can engage the lower edge of the outer circumferential surface 25b of the ring 16 with a fingernail, knife, or other object capable of catching hold of the relatively soft ring 16. The ring 16 can be lifted outward, away from the channel 22 as shown in Figure 7, until enough of the ring 16 is exposed to permit the individual to grasp the ring 16. The entire ring 16 can then be pulled out of the channel 22.

The ring 16 can thus be removed from the outer shell 14 with a minimum of time and effort before the remainder of the bowl 10 is placed in a dishwasher. Subjecting an anti-slip provision such as the ring 16 to multiple dishwasher cycles can cause the anti-slip provision, and its attachment means, to degrade. Thus, configuring the ring 16 to be removable can eliminate this potential source of degradation and thereby prolong the useful life of the bowl 10.

A portion of the bottom surface 17 of the bowl is approximately co-planar with the bottom surface 38 of the outer shell 14, as shown in Figures 1 and 5. This feature can make it difficult for a dog or other animal to grasp the ring 16 in a manner that facilitates removal of the ring 16 from the channel 22.

The plastic material from which the outer shell 14 is formed is receptive to paint and ink. Thus, decorative features 40 can be painted or printed on an outer.surface of the sidewall 36 of the outer shell 14, as shown in Figures 1 and 3. Stainless steel surfaces, by contrast, generally are not receptive to paint or ink, and thus to do not make suitable surfaces for painted or printed decorative features. Moreover, the plastic outer shell 14 is resistant to denting.

Features such as the channel 22 can be formed in the outer shell 14 to relatively close dimensional tolerances using injection molding or other suitable manufacturing techniques. The ability to form the channel 22 to relatively close tolerances can facilitate the use of an interfere fit to retain the ring 16 on the outer shell. An interference fit, in turn, can obviate the need for fasteners, posts, or other additional features to attach the ring 16 to the outer shell 14. Moreover, as discussed above, the use of an interference fit facilitates removal of the ring 16 from the outer shell 14 with a minimum of time and effort. By contrast, it can be difficult or otherwise unfeasible to form features such as the channels 22 in a stainless steel shell with the requisite degree of precision needed to facilitate an interference fit with the ring 16, using stamping or other metalworking techniques.

The water held within the volume 33 of the bowl 10 is exposed to the stainless steel inner shell 12. The use of stainless steel, as discussed above, reduces the potential for the water to be exposed to harmful bacteria. Moreover, the use of the plastic outer shell 14 permits features such as the channels 22 to be formed in the bowl 10 with the precision required to facilitate an interference fit with the ring 16. Moreover, the plastic facilitates the use of decorative features 40 on the sidewall 36 of the outer shell 14.

The foregoing description is provided for the purpose of explanation and is not to be construed as limiting the invention. Although the invention has been described with reference to preferred embodiments or preferred methods, it is understood that the words which have been used herein are words of description and illustration, rather than words of limitation. Furthermore, although the invention has been described herein with reference to particular structure, methods, and embodiments, the invention is not intended to be limited to the particulars disclosed herein, as the invention extends to all structures, methods and uses that are within the scope of the appended claims. Those skilled in the relevant art, having the benefit of the teachings of this specification, can make numerous modifications to the invention as described herein, and changes may be made without departing from the scope of the invention as defined by the appended claims.

For example, an embodiment in the form of a bowl 10 for holding water for a domesticated animal is disclosed for exemplary purposes only.

Alternative embodiments of the bowl 10 can be shaped differently than the bowl 10.

## Claims

1. A pet bowl (10) comprising:
a first shell (14) formed from a non-metallic material;
a second shell (12) formed from a metallic material and positioned at least in part within the first shell;
**characterized in that the** pet bowl (10) further comprises
an anti-slip provision (16) comprising a ring made of elastomeric material, the anti-slip provision being removably mounted on a bottom surface (38) of the first shell (14) which has a substantially circular recess (22) formed therein that receives the ring of the anti-slip provision,
wherein the ring has a bottom surface (17) for contacting the ground (50), and wherein a portion of the bottom surface (17) is substantially co-planar with the bottom surface (38) of the first shell (14),
wherein the ring (16) is removably mounted on the first shell (14) using an interference fit between the ring (16) and the recess (22) of the first shell,
wherein the bottom surface (17) of the ring (16) has a plurality of concentric ribs (18),
wherein the recess (22) has a depth (D),
wherein the ring (16) has a height (H) defined by a distance between the bottom of the ribs (18) and a top surface (27) of the ring (16), the height (H) being slightly greater than the depth (D) of the recess (22) such that the ribs (18) extend below a plane of the bottom surface (38) of the first shell (14) and the remainder of the bottom surface (17) of the ring (16) is substantially co-planar with the bottom surface (38) of the first shell (14).

2. The pet bowl (10) of claim 1, wherein the non-metallic material is a thermoplastic, thermosetting, or other plastic material.

3. The pet bowl (10) of one of the preceding claims, wherein the metallic material is stainless steel.

4. The pet bowl (10) of one of the preceding claims, wherein the second shell (12) comprises a sidewall (30) and a bottom portion (32) defining an open volume (33) capable of holding a liquid.

5. The pet bowl (10) of one of the preceding claims, wherein printed matter is displayed on an outer surface (36) of the first shell (14).

6. The pet bowl (10) of one of the preceding claims, wherein an upper edge of the second shell (12) is folded around a lip (15) of the first shell (14) to secure the second shell (12) to the first shell (14).

7. The pet bowl (10) of one of the preceding claims, wherein the first shell (14) is resistant to denting and receptive to paint and ink

8. The pet bowl (10) of one of the preceding claims in which a bottom (32) of the second shell (12) is substantially flat.

## Patentansprüche

1. Fressnapf (10), der umfasst:
eine erste Schale (14), die aus einem nichtmetallischen Material besteht;
eine zweite Schale (12), die aus einem metallischen Material besteht und wenigstens teilweise im Inneren der ersten Schale angeordnet ist;
**dadurch gekennzeichnet, dass** der Fressnapf (10) des Weiteren umfasst:
eine Gleitschutz-Ausstattung (16), die einen Ring umfasst, der aus Elastomermaterial besteht, wobei die Gleitschutz-Ausstattung abnehmbar an einer unteren Fläche (38) der ersten Schale (14) angebracht ist, an der eine im Wesentlichen kreisförmige Vertiefung (22) ausgebildet ist, die den Ring der Gleitschutz-Ausstattung aufnimmt,
wobei der Ring eine untere Fläche (17) aufweist, die mit dem Boden (50) in Kontakt kommt, und ein Abschnitt der unteren Fläche (17) im Wesentlichen koplanar mit der unteren Fläche (38) der ersten Schale (14) ist,
der Ring (16) mittels einer Presspassung zwischen dem Ring (16) und der Vertiefung (22) der ersten Schale abnehmbar an der ersten Schale (14) angebracht ist,
die untere Fläche (17) des Rings (16) eine Vielzahl konzentrischer Rippen (18) aufweist,
die Vertiefung (22) eine Tiefe (D) hat,
der Ring (16) eine Höhe (H) hat, die durch einen Abstand zwischen dem unteren Ende der Rippen (18) und einer oberen Fläche (27) des Rings (16) definiert wird, wobei die Höhe (H) geringfügig größer ist als die Tiefe (D) der Vertiefung (22), so dass sich die Rippen (18) unterhalb einer Ebene der unteren Fläche (38) der ersten Schale (14) erstrecken und der verbleibende Teil der unteren Fläche (17) des Rings (16) im Wesentlichen koplanar mit der unteren Fläche (38) der ersten Schale (14) ist.

2. Fressnapf (10) nach Anspruch 1, wobei das nichtmetallische Material ein thermoplastisches, duroplastisches oder anderes Kunststoffmaterial ist.

3. Fressnapf (10) nach einem der vorangehenden Ansprüche, wobei das metallische Material rostfreier Stahl ist.

4. Fressnapf (10) nach einem der vorangehenden Ansprüche, wobei die zweite Schale (12) eine Seitenwand (30) und einen Bodenabschnitt (32) umfasst, die einen offenen Raum (33) bilden, der eine Flüssigkeit aufnehmen kann.

5. Fressnapf (10) nach einem der vorangehenden Ansprüche, wobei ein Aufdruck an einer Außenfläche (36) der ersten Schale (14) angezeigt wird.

6. Fressnapf (10) nach einem der vorangehenden Ansprüche, wobei ein oberer Rand der zweiten Schale (12) um eine Lippe (15) der ersten Schale (14) herum gebogen ist, um die zweite Schale (12) an der ersten Schale (14) zu befestigen.

7. Fressnapf (10) nach einem der vorangehenden Ansprüche, wobei die erste Schale (14) beständig gegenüber Verbeulen ist und Farbe sowie Tinte annimmt.

8. Fressnapf (10) nach einem der vorangehenden Ansprüche, wobei ein Boden (32) der zweiten Schale (12) im Wesentlichen flach ist.

## Revendications

1. Bol pour animal domestique (10) comprenant :
une première coque (14) formée d'un matériau non métallique ;
une seconde coque (12) formée d'un matériau métallique et positionnée au moins en partie à l'intérieur de la première coque ;
**caractérisé en ce que** le bol pour animal domestique (10) comprend en outre
un dispositif anti-glissement (16) comprenant un anneau constitué de matériau élastomère, le dispositif anti-glissement étant monté de manière amovible sur une surface inférieure (38) de la première coque (14) qui présente un renfoncement sensiblement circulaire (22) formé à l'intérieur qui reçoit l'anneau du dispositif anti-glissement,
où l'anneau présente une surface inférieure (17) pour la mise en contact avec le sol (50), et où une partie de la surface inférieure (17) est sensiblement coplanaire avec la surface inférieure (38) de la première coque (14),
où l'anneau (16) est monté de manière amovible sur la première coque (14) en utilisant un ajustement par interférence entre l'anneau (16) et le renfoncement (22) de la première coque,
où la surface inférieure (17) de l'anneau (16) présente une pluralité de nervures concentriques (18),
où le renfoncement (22) présente une profondeur (D),
l'anneau (16) ayant une hauteur (H) définie par une distance entre le fond des nervures (18) et une surface supérieure (27) de l'anneau (16), la hauteur (H) étant légèrement supérieure à la profondeur (D) du renfoncement (22) de sorte que les nervures (18) s'étendent en-dessous d'un plan de la surface inférieure (38) de la première coque (14) et le reste de la surface inférieure (17) de l'anneau (16) étant sensiblement coplanaire avec la surface inférieure (38) de la première coque (14).

2. Bol pour animal domestique (10) selon la revendication 1, le matériau non métallique étant un matériau thermoplastique, thermodurcissable, ou un autre matériau plastique.

3. Bol pour animal domestique (10) selon l'une des revendications précédentes, le matériau métallique étant de l'acier inoxydable.

4. Bol pour animal domestique (10) selon l'une des revendications précédentes, dans lequel la seconde coque (12) comprend une paroi latérale (30) et une partie inférieure (32) délimitant un volume ouvert (33) capable de contenir un liquide.

5. Bol pour animal domestique (10) selon l'une des revendications précédentes, dans lequel la matière imprimée est affichée sur une surface extérieure (36) de la première coque (14).

6. Bol pour animal domestique (10) selon l'une des revendications précédentes, dans lequel un bord supérieur de la seconde coque (12) est plié autour d'une lèvre (15) de la première coque (14) pour fixer solidement la seconde coque (12) à la première coque (14).

7. Bol pour animal domestique (10) selon l'une des revendications précédentes, dans lequel la première coque (14) est résistante aux morsures et sensible à la peinture et à l'encre.

8. Bol pour animal domestique (10) selon l'une des revendications précédentes dans lequel un fond (32) de la seconde coque (12) est sensiblement plat.
